# EUROPEAN PATENT APPLICATION

(11) **EP 2 975 581 A1**
(43) Date of publication of application: **20.01.2016**
(21) Application number: 15177050.0
(22) Date of filing: 16.07.2015
(51) Int. Cl.: G07B 15/00

(54) **TRANSIT AUTHORITY FARE ADMINISTRATION AND MANAGEMENT SYSTEM**

(30) Priority: 16.07.2014 US 201462025282 P
(71) Applicant: SPX Corporation, Charlotte, NC 28277 (US)
(72) Inventor: NORTON, Kent, Charlotte, NC 28277 (US); McNEIL, Paul, Elk Grove Village, IL 60007 (US)
(74) Representative: Nguyen Van Yen, Christian

(57) **Abstract**

A remote transit authority fare collection system includes at least one server configured to receive fare collection information and at least one database configured to store the fare collection information received by the at least one server. The at least one server is further configured to aggregate the fare collection information, and the at least one server is further configured to analyze the fare collection information, wherein the fare collection information received by the at least one server is received over a network from a remote unit. The invention further includes a remote transit authority fare collection process.

## Description

### FIELD OF THE INVENTION

The invention relates to a system for a transit authority to administer and manage fare collection. More particularly, the invention relates to a system for a transit authority to administer and manage fare collection utilizing a cloud-based system. Even more particularly, the invention relates to a system to administer and manage fare collection utilizing a cloud-based system for a plurality of transit authorities.

### BACKGROUND OF THE INVENTION

Transit authorities provide transportation services in many localities including bus transportation services, subway transportation services, rail transportation services, light rail transportation services and the like. The transportation services reduce congestion in the localities, provide low-cost transportation services, reduce pollution, and reduce the consumption of fossil fuels. Customers of these transportation services pay these transit authorities a fare for these transit services.

Many transit authorities utilize a cash-based system to collect fares for riders utilizing transportation services. For example, a cash box located at the front of a bus or a cash collection system at the gates of a subway station. In some implementations, these cash box systems can receive tokens purchased by customers as well. A number of other transit authorities utilize a card-based system. The cards are typically purchased by customers and carry a value. As customers utilize the transportation services, the value in the cards is decremented.

In such card-based systems, typically a bus or subway station will utilize a fare collection device that tracks the card usage by the customer. Thereafter, the fare collection device typically updates a central data system. For example, a fare collection device on a bus will update a centralized fare collection system at a garage (on premise) where the bus returns from time to time. In some cases, such fare collection is accomplished by an individual physically interacting with a fare collection device to obtain fare data. Such physical interaction, increases costs, increases errors, and the like. For many transit authorities, there are multiple garages and multiple stations further complicating the fare administration and management process.

Such an on premise system requires a number of servers and/or other expensive infrastructure. Infrastructure may include the central data system, the collection device, and the like. Such infrastructure requires information technology specialists for installation and configuration, maintenance, backups, patches, and the like. Moreover, such systems lack scalability and disaster recovery. Such infrastructure also can have limited availability. As noted above, for many transit authorities, there are multiple on premise systems further complicating the maintenance and operation of such infrastructure.

Accordingly, there is needed an automated fare collection system having scalability, reduced cost, real-time disaster recovery, and high availability that may be implemented system wide for a transit authority or implemented for multiple transit authorities.

### SUMMARY OF THE INVENTION

The foregoing needs are met, to a great extent, by the invention, wherein in one aspect a technique and apparatus are provided for a transit authority to wirelessly administer and manage fares utilizing a cloud-based system.

In one aspect of the invention, a remote transit authority fare collection system includes at least one server configured to receive fare collection information, at least one database configured to store the fare collection information received by the at least one server, the at least one server further configured to aggregate the fare collection information, and the at least one server further configured to analyze the fare collection information, wherein the fare collection information received by the at least one server is received over a network from a remote unit.

The fare collection information may be received by the at least one server is received wirelessly over a network from the remote unit. The collection information may include a location of the fare collection, where the fare was collected, when the fare was collected, the amount of the fare, and the transit authority that collected the fare. The fare collection information may include at least one of determining whether the fare collection information is valid, determining whether the fare collection non-fraudulent, and determining whether the fare collection conforms with policy. The at least one server may be further configured to receive a request to generate a report, and the at least one server further configured to generate and send the report. The remote unit may be configured to register a fare collection event. The remote unit may be configured to transmit a fare collection event to the at least one server. The at least one server may further be configured to receive a request to modify at least one remote unit, and the at least one server further configured to modify the at least one remote unit.

Another aspect of the invention is directed to a remote transit authority fare collection process that includes receiving fare collection information in at least one server, storing in at least one database the fare collection information received by the at least one server, aggregating the fare collection information in the at least one server, and analyzing the fare collection information in the at least one server, wherein the fare collection information received by the at least one server is received over a network from a remote unit.

Wirelessly receiving the fare collection information may be over a network from the remote unit. The fare collection information may include a location of the fare collection, where the fare was collected, when the fare was collected, the amount of the fare, and the transit authority that collected the fare. The analyzing the fare collection information may include at least one of determining whether the fare collection information is valid, determining whether the fare collection non-fraudulent, and determining whether the fare collection conforms with policy. The process may further include receiving a request to generate a report, and generating and sending the report from the at least one server. The process may further include registering a fare collection event with the remote unit. The process may further include transmitting a fare collection event from the remote unit to the at least one server. The may further include receiving a request to modify at least one remote unit, and modifying the at least one remote unit.

In a further aspect of the invention, a remote transit authority fare collection system includes at least one server configured to receive fare collection information, wherein the fare collection information comprises at least one of a location of the fare collection, where the fare was collected, when the fare was collected, the amount of the fare, and the transit authority that collected the fare, at least one database configured to store the fare collection information received by the at least one server, the at least one server further configured to aggregate the fare collection information, and the at least one server further configured to analyze the fare collection information, wherein the analysis of the fare collection information comprises at least one of determining whether the fare collection information is valid, determining whether the fare collection non-fraudulent, and determining whether the fare collection conforms with policy, wherein the fare collection information received by the at least one server is received wirelessly over a network from the remote unit.

The at least one server is may further be configured to receive a request to generate a report, and the at least one server further configured to generate and send the report. The remote unit may be configured to register a fare collection event, and wherein the remote unit is configured to transmit a fare collection event to the at least one server. The at least one server may further be configured to receive a request to modify at least one remote unit, and the at least one server further configured to modify the at least one remote unit.

There has thus been outlined, rather broadly, certain aspects of the invention in order that the detailed description thereof herein may be better understood, and in order that the present contribution to the art may be better appreciated. There are, of course, additional aspects of the invention that will be described below and which will form the subject matter of the claims appended hereto.

In this respect, before explaining at least one aspect of the invention in detail, it is to be understood that the invention is not limited in its application to the details of construction and to the arrangements of the components set forth in the following description or illustrated in the drawings. The invention is capable of aspects in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the invention. It is important, therefore, that the claims be regarded as including such equivalent constructions insofar as they do not depart from the spirit and scope of the invention.

### BRIEF DESCRIPTION OF THE DRAWINGS

Figure 1 shows an overview of the transit authority fare administration and management system according to one aspect of the invention.
Figure 2 shows details of a transit management and administration cloud according to one aspect of the invention.
Figure 3 shows a process of operating a remote reader unit according to one aspect of the invention.
Figure 4 shows a transactional process of operating the transit management and administration cloud according to one aspect of the invention.
Figure 5 shows an administrative process of operating the transit management and administration cloud according to one aspect of the invention.
Figure 6 is a schematic of the functional modules of the transit management administration cloud according to one aspect of the invention.
Figure 7 is a schematic diagram of a fare collection box in accordance with the present disclosure.
Figure 8 is a schematic diagram showing things that can be in communication with the fare collection box and accordance with the disclosure.
Figure 9 is a schematic diagram of things that can be in communication with the microprocessor associated with the fare collection box in accordance with the disclosure.
Figure 10 shows the details of a point-of-sale system according to one aspect of the invention.

### DETAILED DESCRIPTION

The invention will now be described with reference to the drawing figures, in which like reference numerals refer to like parts throughout. Aspects of the invention advantageously provide a system for a transit authority to wirelessly administer and manage fares utilizing a cloud-based system.

As may be appreciated by those skilled in the art, the illustrated structure is a logical structure and not a physical one. Accordingly, the illustrated modules can be implemented by employing various hardware and software components. In addition, two or more of the logical components can be implemented as a single module that provides functionality for both components. In one aspect, the components are implemented as software program modules.

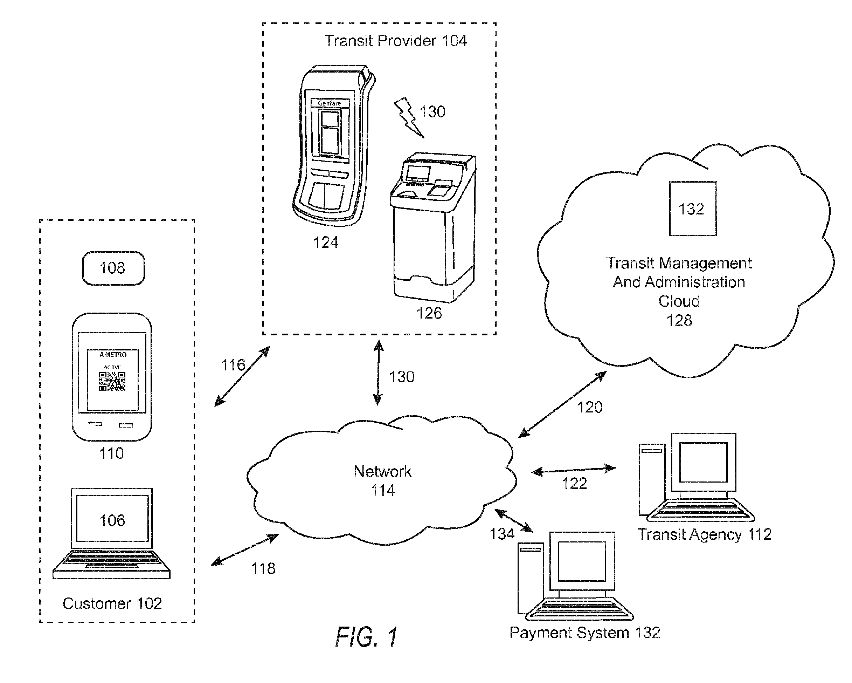

Figure 1 shows an overview of the transit authority fare administration and management system. In particular, a customer 102 seeking to utilize transportation services from a transit authority may utilize a smart card 108, a smartphone 110, or other fare media to pay a fare to use transportation services. In this regard, the transit provider 104 may utilize a remote reader unit 124 or a fare collection device 126 to interact with the smart card 108, the smartphone 110, or other fare media to collect the fare from the customer 102. The remote reader unit 124 or the fare collection device 126 may then communicate 130 the detailed information of the transaction over a network 114 to a transit management and administration cloud 128.

The customer 102 may utilize the smart card 108 or the smartphone 110 to communicate 116 to pay the fare to use transportation services by interacting with the remote reader unit 124 or the fare collection device 126 over a customer communication channel as defined herein. For example, the customer 102 may utilize a smartphone 110 displaying a bar code on the display thereof. The bar code may utilize numerous different known encoding styles including QR code, Aztec, or the like. The bar code may be generated by an application executed by the smartphone 110. The application may allow for electronic payment through the smartphone 110 in order to receive a bar code. Alternatively, the customer 102 may utilize a computer 106 having an Internet connection and browser to pay a fare resulting in the display of a bar code utilizing the above noted application executed on the smartphone 110. The customer 102 may display the bar code to a code reader associated with the remote reader unit 124. Thereafter, the remote reader unit 124 may read the bar code and register a fare payment event. The remote reader unit 124 may further communicate with the smartphone 110 to update the information on the smartphone 110.

The remote reader unit 124 and/or the fare collection device 126 may also have the ability to determine if the bar code is valid, meaning that the bar code has never been used before and that the encoding represents a token that can be mapped back to a data system as representing a fully paid fare. If the bar code is not valid, the remote reader 124 and/or the fare collection device 126 may reject the transaction. The validation process provides the ability to have a recent-time ability to validate payment transactions.

As another example, the customer 102 may utilize a smart card 108 utilizing a RFID (Radio Frequency IDentification) functionality. The customer 102 may present the smart card 108 within radio frequency range of the remote reader unit 124. Thereafter, the remote reader unit 124 may interrogate the RFID of the smart card 108 to register a fare payment event. The remote reader unit 124 may further communicate with the smart card 108 to update the information on the smart card 108.

The remote reader unit 124 and/or the fare collection device 126 may also have the ability to determine if the smart card 108 is valid, meaning that the smart card 108 encoding represents a token that can be mapped back to a data system as representing a fully paid fare. If the smart card 108 is not valid, the remote reader 124 and/or the fare collection device 126 may reject the transaction.

Alternatively or additionally, the customer 102 may utilize cash or tokens to pay a fare to use transportation services by inserting the cash or tokens into the fare collection device 126.

Payments and provisioning of the smart card 108 and/or the application executed on the smartphone 110 may be handled by a payment system 132. The customer 102 may utilize the smartphone 110, an internet-enabled computer 106, or the like to make funds available for a customer account handled by the payment system 132. The payment system 132 may generate a web-based application to allow the customer 102 to provide personal data, payment information, and the like to fund the smart card 108 or the smartphone 110 application. The payment system 132 may further interact with the smartphone 110 application to allow the customer 102 to provide personal data, payment information, and the like to fund the smartphone 110 application. The payment system 132 may further update various databases associated with the smart card 108 or the smartphone 110 application. The payment system 132 may communicate 134 over a communication channel as defined herein to the network 114. Such communication may further continue over a communication channel 120 as defined herein to the transit management and administration cloud 128. This communication providing information relative to funds, the customer 102, and other information relative to the smart card 108 and/or smartphone 110 application. The payment system 132 may be a separate system as shown in Figure 1 or integrated into the transit management and administration cloud 128 as shown at 132'.

The transit management and administration cloud 128 may also communicate over a communication channel 120 as defined herein to the payment system 132 to provide fare collection events and other information with respect to a particular customer 102. This information may be utilized by the payment system 132 to update the database so that a particular customer account reflects available funds and accurate usage of the smart card 108 and/or smartphone 110 application. In particular, the payment system 132 and/or transit management and administration cloud 128 may be a complete web based fare collection system designed to manage each transaction from fare media issuance through fulfillment.

The remote reader unit 124 or the fare collection device 126 may be configured to accept all types of traditional and modern fare media. For example magnetic-based media, smart card media (Smart cards available in various forms: Tags, key chains, fobs, stickers, watches and NFC phones), mobile tickets, near field communication (NFC) phone applications, and the like. Additionally, the remote reader unit 124 or the fare collection device 126 may be configured to support integration with new or existing fare boxes. Additionally, the remote reader unit 124 or the fare collection device 126 may operate in a standalone configuration or alternatively in a multiunit environment. In this regard, the remote reader unit 124 or the fare collection device 126 may be implemented with multiple units per vehicle. For example, a remote reader unit 124 located at the back of a bus and a fare collection device 126 arranged at the front of the bus near a bus driver. Moreover, when there is more than one remote reader unit 124 or the fare collection device 126, one may be designated a master device and other(s) designated as a slave device(s). Additionally, the remote reader unit 124 or the fare collection device 126 may accept and process credit and debit cards and conveniently issue smartcards or magnetic cards for quick and easy customer travel. Other implementations are contemplated as well.

The remote reader unit 124 and/or the fare collection device 126 may be implemented with a transceiver to communicate wirelessly on a communication channel as defined herein to the network 114 or to another remote reader unit 124 or the fare collection device 126. In a particular aspect, the transceiver may utilize a communication channel utilizing LTE for communication to the network 114 utilizing wireless broadband.

The network 114 may include one or more networks. The one or more networks of the network 114 may utilize a communication channel as defined herein. In one aspect, the network 114 may include a cellular wireless broadband network utilizing a LTE communication channel, the network 114 may further include the Internet further communicating on a possibly different communication channel as defined herein.

The transit management and administration cloud 128 may connect to the network 114 over a communication channel 120 as defined herein. In particular, the transit management and administration cloud 128 may communicate over the network 114 implemented utilizing the Internet and a cellular network as described above.

For example, the transit management and administration cloud 128 may also use a WiFi network. The transit management and administration cloud 128 may communicate over the Internet and from there communicate to a fare collection device 126 via wireless (LTE) and then from there via WiFi to talk to a remote reader 124. Accordingly, the Internet, wireless and WLAN (WiFi) technologies may all be part of the communication path depending upon where the devices are, and how they are configured to communicate.

After, the remote reader unit 124 or the fare collection device 126 registers a fare collection event, the remote reader unit 124 or the fare collection device 126 may then communicate 130 the transaction over the network 114 and further communicate over a communication channel 120 to the transit management and administration cloud 128.

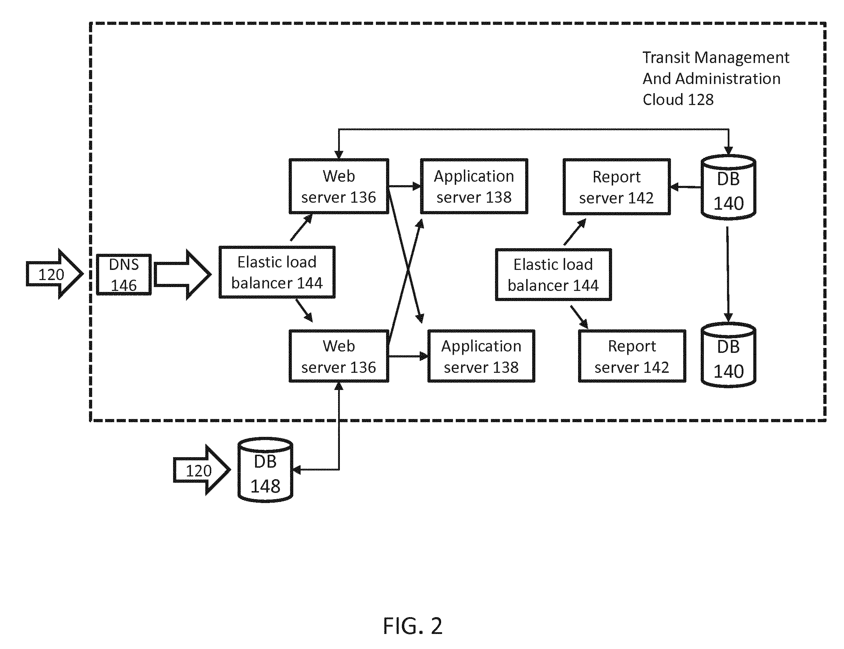

Referring to Figure 1 and Figure 2, the transit management and administration cloud 128 may include a Domain Name System (DNS) service 146, a content delivery network, an elastic load balancing system, and an automatic scaling set of deployed Web servers 136, application servers 138, and report servers 142. The Web servers 136, application servers 138, and report servers 142 may be deployed in an auto scaling group with one or more elastic load balancers 144. The application servers 138 may further connect to a series of databases 140. The series of databases 140 may be implemented as a plurality of relational database service (RDS) database instances. Additionally, there may be additional S3 databases 148 to provide storage accessible over a communication channel 120 by the network and transit provider 104.

For example, the transit management and administration cloud 128 may be implemented utilizing the Amazon Elastic Compute Cloud (EC2) virtual instances provided by Amazon.com, Inc. Seattle, Washington, USA. In this regard, the DNS may be a Route 53 DNS.

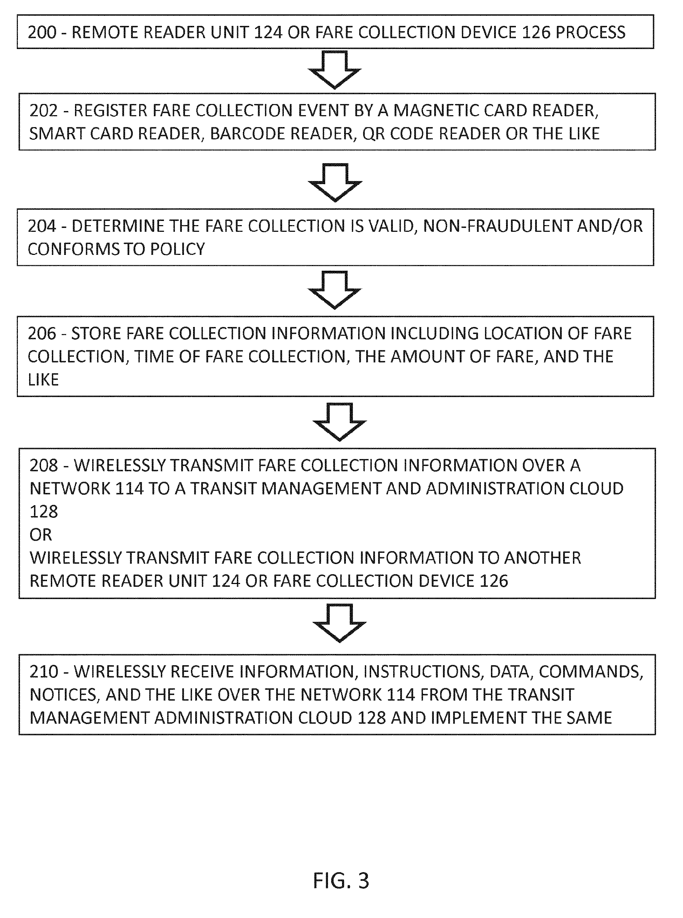

Figure 3 shows a process of operating the remote reader unit according to one aspect of the invention. In particular, Figure 3 shows a remote reader unit 124 or fare collection device 126 process 200. The remote reader unit 124 or fare collection device 126 may implement a number of processes. The process 200 is one of several associated with the remote reader unit 124 or fare collection device 126.

In process 202, the remote reader unit 124 or fare collection device 126 may register a fare collection event by a magnetic card reader, smart card reader, bar code reader, cash collection device, token collection device, or the like. In particular, a customer 102 may start their journey on the transit system by providing payment for the transit services using cash, tokens, a smart card 108, a smartphone 110 application, or any other fare media. The process 202 may register a fare collection event by sensing a magnetic code utilized on a card having a magnetic strip utilizing a magnetic card reader. Alternatively, the process 202 may register a smart card 108 by receiving an identification from a RFID circuit. The process 202 may also register a fare collection event by reading a bar code or bar code from an optical reader. The process 202 is also contemplated to further register a fare collection event using any other type of fare media including near field communications (NFC), cash or tokens.

In process 204, the remote reader unit 124 or fare collection device 126 may determine whether the fare collection is valid and non-fraudulent. This process may include determining that a magnetic code, bar code, RFID identification, or other identifying fare media information is appropriate. Appropriate fare media information may include determining if the corresponding code is counterfeit, includes the correct information, and the like. Additionally, the remote reader unit 124 or fare collection device 126 may determine whether the fare conforms with policy of the transit authority. In the event that the fare collection is not considered valid, considered fraudulent and/or does not conform to policy, the remote reader unit 124 or fare collection device 126 may alert the driver and the customer 102 that a fare has not been collected. The customer 102 may thereafter attempt to utilize their fare media again.

Next, process 206 may include storing fare collection information including location of fare collection, time of fare collection, the amount of fare, flat fare or zone-based information, peak and off-peak information, route or class of service information (local, express, shuttle, etc.), and the like. The storing process may be implemented locally in the remote reader unit 124 or fare collection device 126. The storing process may also be implemented within the transit vehicle.

Once the fare collection information is stored, in process 208 the fare collection information may be communicated 130 over a network 114 to the transit management and administration cloud 128. The communication 130 from the remote reader unit 124 or fare collection device 126 may utilize a communication channel as defined herein across the network 114 to a communication channel 120 to the transit management administration cloud 128. The communication 130 from the remote reader unit 124 or fare collection device 126 to the transit management administration cloud 128 may be wireless, may be instantaneous, may be in real-time, may be periodic, may be in an ad hoc manner, or the like

Alternatively, if the remote reader unit 124 or fare collection device 126 operates in conjunction with another reader unit 124 or fare collection device 126, the remote reader unit 124 or fare collection device 126 may wirelessly transmit fare collection information 130' to another remote reader unit 124 or fare collection device 126. This process may be utilized when the remote reader unit 124 or fare collection device 126 is operating as a slave device. Thereafter, the remote reader unit 124 or fare collection device 126 operating as the master device may subsequently wirelessly communicate 130 over a network 114 to the transit management and administration cloud 128 as described above. Additionally, the remote reader unit 124 or fare collection device 126 may wirelessly transmit any type of information, instructions, data, commands, notices, errors, faults, and the like over the network 114 to the transit management and administration cloud 128.

In process 210 the remote reader unit 124 or fare collection device 126 may receive information, instructions, data, commands, updates, notices, and the like over the network 114 from the transit management and administration cloud 128. For example, the remote reader unit 124 or fare collection device 126 may receive information that a particular fare media is problematic; the remote reader unit 124 or fare collection device 126 may receive instructions and software updates along with the schedule for executing the same; the remote reader unit 124 or fare collection device 126 may receive updates regarding fare structure and the like.

Accordingly, the process 200 allows a transit provider 104 to collect a fare from a customer 102 utilizing any type of fare media. This fare collection process and the associated information may be transmitted to the transit management administration cloud 128 in an automated fashion. Additionally, the remote reader unit 124 or fare collection device 126 may receive information, instructions, data, commands, updates, notices, and the like in an automated manner.

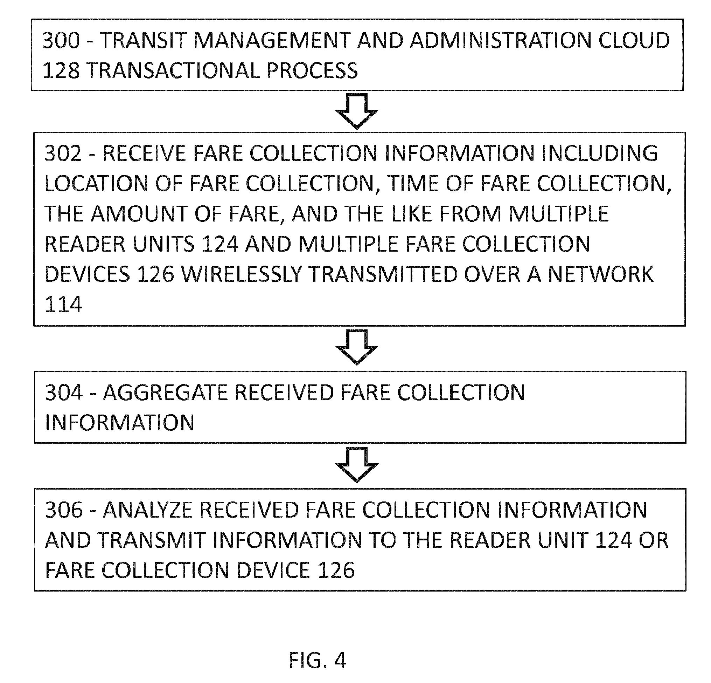

Figure 4 shows a transactional process of operating the transit management and administration cloud according to one aspect of the invention. In particular, process 300 is directed to collecting information from a plurality of customers 102, from a plurality of transit types provided by a transit provider 104. The transit management administration cloud 128 may implement a number of processes. The process 300 is one of several associated with the transit management administration cloud 128. Moreover, the transit management administration cloud 128 may be configured to manage and administer a plurality of transit authorities.

In process 302, the transit management administration cloud 128 may receive fare collection information including location of fare collection, time of fare collection, the amount of fare, and the like from multiple reader units 124 and multiple fare collection devices 126. This fare information may be transmitted over the network 114. In particular, as described with respect to process 200, each of the fare collection events generated by multiple reader units 124 and multiple fare collection devices 126 are transmitted on a communication channel 130 as defined herein over a network 114 across a communication channel 120 to the transit management administration cloud 128. The fare collection information may be stored in one or more databases 140 associated with the transit management administration cloud 128.

Additionally, process 302 may further include the collection of any type of information from multiple reader units 124 and multiple fare collection devices 126. This information can include the status of a reader unit 124 and a fare collection device 126; problems related to a reader unit 124 and a fare collection device 126; errors related to a reader unit 124 and a fare collection device 126 and the like. The process 302 of receiving information may be implemented by the Web servers 136 and/or the application servers 138 of the transit management administration cloud 128. Other implementations are contemplated as well.

In a particular aspect, a tool called an "Enterprise Service Bus" (ESB) may be utilized to receive all incoming communications. The ESB may operate conceptually like a smart switchboard that allows any type of incoming traffic: FTP, raw TCP socket, SFTP, SMB, HTTP, and the like. The ESB may be pre-configured to have a complex rule set that tells it what do with the traffic that comes in, write it to S3 storage, write it to a database, and the like. The ESB may be front-ended by the transit management and administration cloud 128 elastic load-balancers so that there may be disaster recovery and automated failover in the event one of the ESB instances fails.

Thereafter, in process 304 the transit management administration cloud 128 may aggregate all of the received fare collection information. The aggregation of all the received fare collection information may be based on a particular transit agency, a particular mode of transportation, a particular vehicle, a particular customer, a particular route, a particular reader unit 124 or fare collection device 126, and the like. The process 304 of aggregating fare collection information may be implemented by the Web servers 136 and/or the application servers 138 of the transit management administration cloud 128. Other implementations are contemplated as well.

Next, in process 306 the transit management administration cloud 128 may analyze the received fare collection information. The analysis may determine whether the collected fare is valid, nonfraudulent, and consistent with policy. The process 306 of analyzing fare collection information may be implemented by the Web servers 136 and/or the application servers 138 of the transit management administration cloud 128. Other implementations are contemplated as well.

Thereafter, the transit management administration cloud 128 may transmit information to the remote reader unit 124 or fare collection device 126. The information may include acknowledgment that the collected fare is valid, nonfraudulent, and consistent with policy; the information may include that the collected fare invalid, fraudulent, and/or not consistent with policy; information may include notices, requests, instructions and the like. The process 306 of transmitting information may be implemented by the Web servers 136, the application servers 138 of the transit management administration cloud 128, and/or ESB. Other implementations are contemplated as well.

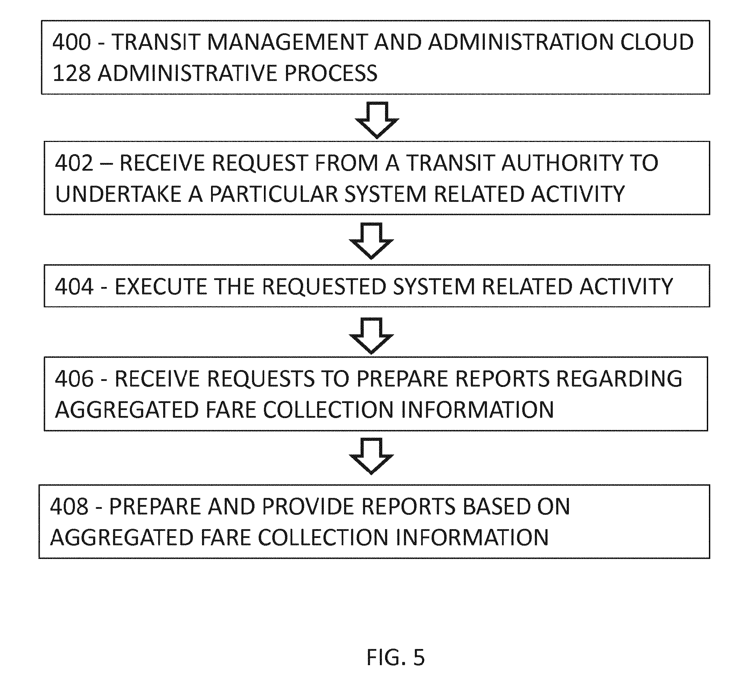

Figure 5 shows an administrative process of operating the transit management and administration cloud according to one aspect of the invention. The transit management administration cloud 128 may implement a number of processes. The process 400 is one of several associated with the transit management administration cloud 128. Moreover, the transit management administration cloud 128 may be configured to manage and administer a plurality of transit authorities.

In process 402, the transit management administration cloud 128 may receive requests from a transit authority to undertake a particular system related activity. Such activities may include changing transit routes, changing fare types, setting up assets, updating hardware, and the like. The process 402 requests may be implemented by the Web servers 136 and/or the application servers 138 of the transit management administration cloud 128. Other implementations are contemplated as well.

In response to process 402, the transit management administration cloud 128 may execute the system related activities in process 404. The process for executing requests may be implemented by the Web servers 136, the application servers 138 of the transit management administration cloud 128, and/or ESB. Other implementations are contemplated as well.

Next, in process 406 the transit management administration cloud 128 may receive requests to prepare reports regarding aggregated fare collection information from a transit agency 112, a customer 102, or the like. In process 408, the transit management administration cloud 128 may prepare reports based on aggregated fare collection information as requested. Thereafter, as part of process 408 the transit management administration cloud 128 may send the reports to the report requester via e-mail, text message, web portal, or the like. The process 406 of preparing and sending reports may be implemented by the Web servers 136 and/or the application servers 138 of the transit management administration cloud 128. Other implementations are contemplated as well.

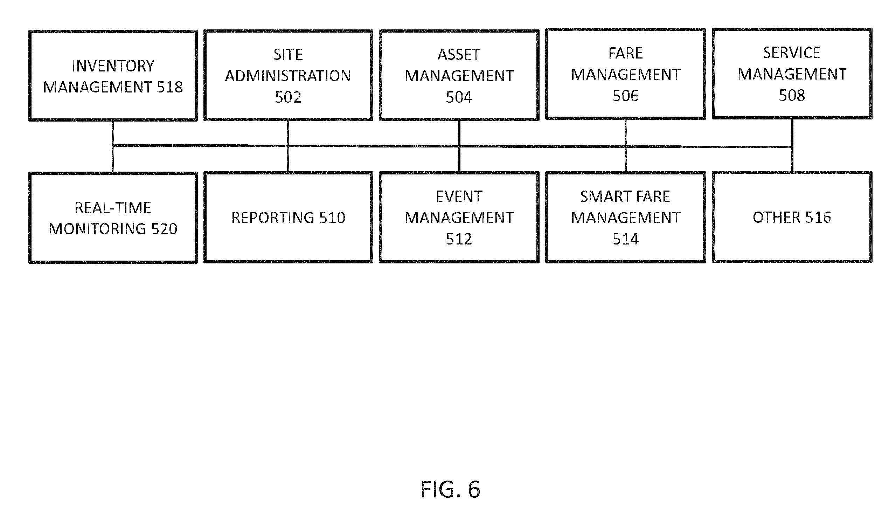

Figure 6 is a schematic of the functional modules of the transit management administration cloud according to one aspect of the invention. In particular, the Web servers 136, the application servers 138, and/or the databases 140 of the transit management administration cloud 128 may implement site administration 502 processes. The site administration 502 processes may include user management processes, group management processes, transit management administration cloud 128 processes, and status processes. The site administration 502 processes may further include control of access rights, implement branding processes, and single sign on (SSO) processes.

The Web servers 136, the application servers 138, and/or the databases 140 of the transit management administration cloud 128 may implement site asset management 504 processes. The site asset management 504 processes may include device firmware management. In particular, the firmware management of any particular device within the system may be monitored and updated as desired. The site asset management 504 processes may include device inventory. The device inventory can include inventory of any device within the system. The site asset management 504 processes may further include device management to assist in managing every device within the system.

The Web servers 136, the application servers 138, and/or the databases 140 of the transit management administration cloud 128 may implement site fare management 506 processes. The site fare management process 506 may include receiving or generating white/black lists with respect to various fares. The site fare management process 506 may include editing of fare structure and may include an associated editor for doing the same. The site fare management process 506 may include editing and generating a fare scheduling with respect to each transit authority, each asset, each route, and the like. The site fare management process 506 may further include action list management and manage interaction with devices.

The Web servers 136, the application servers 138, and/or the databases 140 of the transit management administration cloud 128 may implement site service management 508 processes. The site service management 508 process may include receiving service issues from various assets and generating trouble tickets for the various assets.

The Web servers 136, the application servers 138, and/or the databases 140 of the transit management administration cloud 128 may implement reporting 510 processes. The reporting 510 processes may implement the reporting process associated with processes 406 and 408 as described above or the like. In particular, the reporting processes 510 may include report processes, ad hoc reports, a report scheduler, and the generation of customized reports (my reports).

The Web servers 136, the application servers 138, and/or the databases 140 of the transit management administration cloud 128 may implement event management 512 processes. The event management 512 process may include an event editor allowing a transit authority to edit various events, perform analyses on events received, and define a priority hierarchy of events of interest. The event management 512 process may include the ability to search for various events overseen by the event management 512 process. The events may include collection of faults in various hardware components including memory, security events, operator login/logout, fraud events, and the like.

The Web servers 136, the application servers 138, and/or the databases 140 of the transit management administration cloud 128 may implement smart fare management 514 processes. The smart fare management 514 process may include smart card 108 management to oversee and manage all smart card 108 transactions. The smart fare management 514 process may include bar code management to oversee and manage all bar code transactions. The smart fare management 514 process may further implement an end-user portal for editing and modifying all processes related to smart fare management 514. The smart fare management 514 process may further implement reporting processes.

The Web servers 136, the application servers 138, and/or the databases 140 of the transit management administration cloud 128 may implement inventory management 518. The inventory management 518 may include media management and media diagnostics.

The Web servers 136, the application servers 138, and/or the databases 140 of the transit management administration cloud 128 may implement real-time monitoring 520 that may include event notification, system metrics, alerts and GPS location of various assets.

The Web servers 136, the application servers 138, and/or the databases 140 of the transit management administration cloud 128 may implement other management 516 processes.

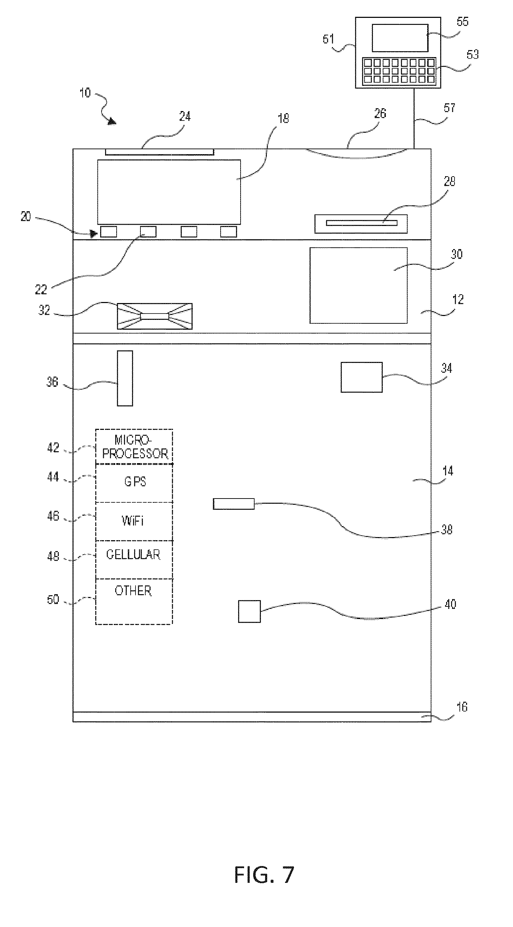

An embodiment of the reader unit 124 or fare collection device 126 is illustrated in Figure 7 as a fare collection box 10. The fare collection box 10 has a lid or top 12 attached to a body 14. The body 14 and the top or lid 12 sit on a base 16. In some embodiments, the base 16 may attached to the floor of a vehicle such as a bus, train, tram, trolley, marine vessel, airplane, or any other vehicle. In other embodiments, the base 16 be attached to the ground or floor when the fare collection box 10 is located in a fixed position such as at a station.

In some embodiments, the fare collection box or farebox 10 may include a display screen 18. The display screen 18 may be an LED screen, a plasma screen, a projection screen or any other suitable screen. The display screen 18 allows a user or operator to view messages from the fare collection box 10. Examples of these messages may include whether or not a fare is recorded as collected, an amount of money associated with the user's account or fare paying device or any other suitable message. In some embodiments, the fare collection box 10 may include a keypad 20 having keys 22. The keypad 20 may be useful as an input device to allow an operator or user to enter data into the fare collection box 10. In some embodiments, the display screen 18 may be a touchscreen thereby allowing a user or operator to enter data into the fare collection box 10 by merely touching the display screen 18. Such an embodiment may obviate the need for a keypad 20 or keys 22 and would therefore not have the keypad 20 or keys 22.

The fare collection box 10 may have a variety of apparatuses which allow the fare collection box 10 to interact with a user or rider in order to collect the fare. For example, a fare collection box 10 may have a magnetic strip reader 24 for reading magnetic strips that may be associated with a user's credit card, debit card, a transit authority provided card or some other card designed to interact with the fare collection box 10. The fare collection box 10 may also have other apparatuses designed to interact with a payment device such as an radio frequency identification (RFID) reader 26 (to read Smart cards), and a scanner 30. The scanner 30 may be able to read bar codes, QR (Quick Response Code) codes or any other indicia. The indicia may exist on a slip of paper, on the screen of a personal electronic device such as, for example, a smart phone, or any other means for displaying machine-readable indicia.

In addition to interacting with the magnetic strip reader 24, the RFID reader 26, or the scanner 30, a user may also make a payment via cash. Cash payments may be accepted by a currency input 28 and or a coin slot 32. A cash return 34 and coin return 36 are provided in some embodiments in order to give change back to a user. Other embodiments may not provide change. A printer having an output 38 allows the fare collection box 10 to provide a user with a printed receipt, transfer, or any other printed material that may be desired.

In some embodiments, a user may pay the fare by interacting with a payment device such as a credit card, smart card, personal electronic device or any other payment device with the magnetic strip reader 24, the RFID reader 26, or the scanner 30. In addition, a user may use cash and/or coins to make a payment. The user may then interact with keypad 20 or touch screen 18 to enter an amount the user wishes to pay. In other embodiments, set fares may be used in the amount deducted from the payment device or taken in cash or coin is preset and not changed by the user. In such embodiments, the preset fare may be deducted from the payment device when it interacts with the magnetic strip reader 24, the RFID reader 26, or the scanner 30.

In some embodiments, the cash fare collection box 10 is equipped with a microprocessor 42 operatively connected to a database 43. The microprocessor 42 may be configured to act as a microcontroller. In some embodiments microprocessor 42 may also be operatively connected to an infrared communication port 40, a GPS unit 44, a Wi-Fi transceiver unit 46, a cellular or transceiver unit 48, and any other communications unit 50. Examples of other communication units 50 may include, but are not limited to, Bluetooth systems, radio systems or any other communication systems. The infrared communication port, GPS unit 44, Wi-Fi transceiver unit 46, and cellular transceiver unit 48 are operatively connected to the microprocessor 42 to receive and transmit data from sources external to the fare collection box 10.

The farebox 10 may also be connected to an operator control unit (OCU) 51. The OCU 51 may contain a keypad 53 and a display 55. The OCU 51 may be connected to the fare collection box 10 by connection 57. The connection 57 may be a physical cable or it could be a wireless connection or any other connection suitable for sharing data and/or signals between the OCU 51 and the fare collection box 10.

The OCU 51 may be used by system operator to add, modify, or harvest data or programing from the fare collection box 10. The OCU 51 may also be used to provide diagnostic functions, updates, patches, modifications or other fixes to software or other problems associated with the fare collection box 10. The OCU 51 is not intended to be operated by customers or patrons of the transportation system but rather a system operator for performing repair, modification, updates, diagnostic, data harvesting, or any other system related tasks.

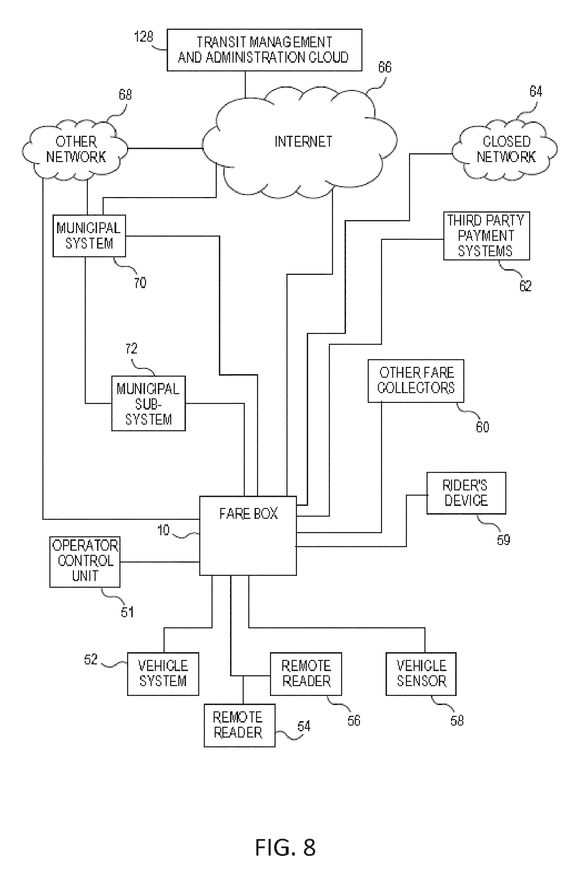

Figure 8 is a schematic diagram of various systems, networks or other hardware that may be in communication with the farebox 10 either directly or via one or more of the infrared communication port 40, the GPS unit 44, the Wi-Fi transceiver unit 46, the cellular transceiver unit 48 or any other communications unit 50.

In embodiments where the fare collection box 10 is mounted onto a vehicle such as a bus, train, marine vessel or any other vehicle, the farebox 10 may be operatively connected to the operator control unit (OCU) 51. The farebox 10 may also be connected to a vehicle diagnostic system 52. The vehicle diagnostic system 52 may be the same as or similar to the existing diagnostic systems that monitor and diagnostic vehicles' operation. As a result, if the vehicle system has a fault, the fault may be transmitted to the fare collection box 10 which may then record the fault and/or transmit the fault to another network such as, for example, the municipal operator of the vehicle, a maintenance garage, or any other suitable place for reporting the fault. Various networks will be described further below.

The fare collection box 10 may also be connected to one or more remote readers 54 and 56. The remote readers 54 and 56 may be other fare collection boxes located on the vehicle. In some embodiments, the remote readers 54 and 56 may be identical in construction to the fare collection box 10. In other embodiments, the remote readers 54 may be scaled down versions of the fare collection box and, for example, not configured to receive cash or coins or dispense them. In other embodiments, the remote readers may also not have communication devices configured to transmit data other than to the main fare collection box 10. The remote readers 54 and 56 may, in some embodiments, have their own microcontrollers. In other embodiments the remote readers 54 and 56 may solely communicate to the farebox 10 and input data into the microprocessor 42 of the farebox 10. The remote readers 54 and 56 may be located at other locations on the transit vehicle to allow passengers or users of a transit system to pay fares at locations on the vehicle remote from the main farebox 10 such as at alternate doors on the transit vehicle. Payment data is then transmitted to the farebox 10.

In other embodiments, one or more vehicle sensors 58 may also be operatively connected to the farebox 10 in order to provide data to the microprocessor 42 contained within the farebox 10. For example sensors 58 detect whether the vehicle doors are open, whether passengers have entered or exited the vehicle, the vehicle's proximity to various objects or any other data that may be sensed by a vehicle sensor 58. The sensors 58 signals may then be transmitted to the farebox 10.

In some embodiments, as shown in Figure 8, the farebox 10 may also communicate with a rider's personal electronic device 59. The farebox 10 may also communicate with other fare dispensing objects 60 such as smart cards, credit cards, debit cards, transfers, tickets or any other payment device 59 as previously discussed.

In some embodiments, the farebox 10 may be configured to also communicate with other fare collectors 60 such as other fare boxes 60 associated with other vehicles. Examples of data that can be transmitted between farebox 10 and a farebox 60 associated with other vehicles can include location data of the farebox 10 and the other fare collector 60 or any other data desired to be shared between the farebox 10 and the other fare collector 60.

The farebox 10 may also be operatively connected via one of its communications systems to third-party payment systems 62. The third-party payment system 62 may be a bank associated or any other financial institution associated with a user's credit card or debit card in order to determine whether payment can be made. Other examples of payment systems 62 may include systems hosting Smartcards or providing scannable indicia as mentioned above. In some embodiments, the purpose of the ability of the farebox 10 to communicate with the outside payment system 62 is to verify that there are sufficient funds associated with the user's account and to actually deduct the funds in order to make a payment for the user's use of the transportation system.

In some embodiments, the farebox 10 may also connect with closed networks 64. Closed networks may be any type of network that is closed from outside networks and designed to communicate with the farebox 10 such as, for example, a system hosting the fare collection and data processing on behalf of a transit authority associated with the farebox 10. In other embodiments, the farebox 10 may be connected to the Internet 66 and other networks 68 which may or may not also host data collection and processing as well as payment proper collection processing for the municipality or which the farebox 10 is associated with.

In some embodiments, the farebox 10 may be configured to be operatively communicative to the Transit Management and Administration Cloud 128. In some embodiments, the operation of the transit system may have a self-contained system 70 and in some embodiments the self-contained system 70 may include one or more substations 72 which may also be able to communicate with farebox 10.

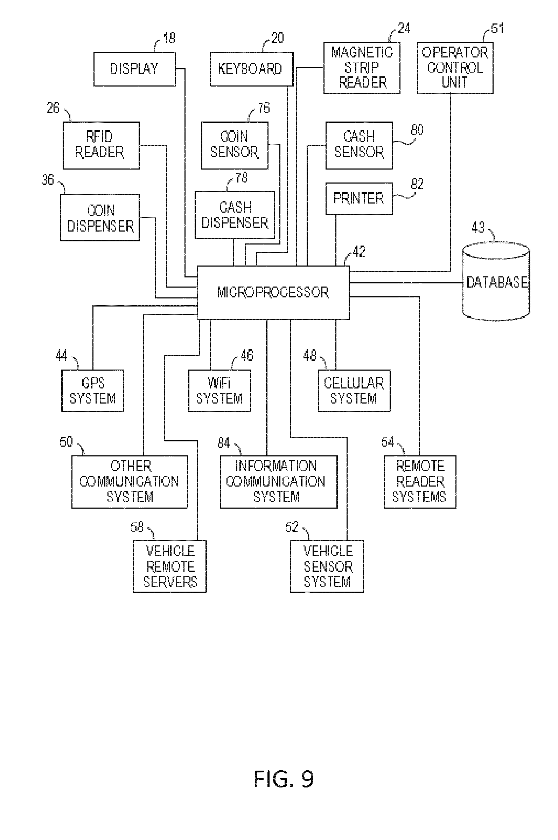

Figure 9 is a schematic diagram showing how the microprocessor 42 is connected to various components associated with farebox 10. As shown in Figure 9, the microprocessor 42 is operatively connected to a database 43 to allow data to be stored and retrieved from the database 43. The microprocessor 42 is also operatively connected to various communication systems for communicating with devices remote from the farebox 10 such as the GPS system 44, Wi-Fi system 46, the cellular system 48 and infrared communication system 84 and any other desired communication system 50. The microprocessor 42 may be also operatively connected with remote reader systems 54, 56 vehicle sensors 58 and the vehicle diagnostic system 52.

The microprocessor 42 is also operatively connected to the printer 82, the cash sensor 80, the magnetic strip reader 24, cash dispenser 78, the coin sensor 76, keypad, the coin dispenser 36, the RFID reader 26, and the display 18. The microprocessor 42 is operatively connected to each of these devices in order to receive data and store that data in the database 43. In the case of the printer 82, the cash dispenser 78, and the coin dispenser 36, the microprocessor 42 may also operatively be connected to activate those features to dispense printed documents, cash, or coins, as desired.

The microprocessor 42 is also operatively connected to the operator control unit (OCU) 51 in a way so that the OCU 51 can communicate with the processor 42 to perform any of the functions of the OCU as described above.

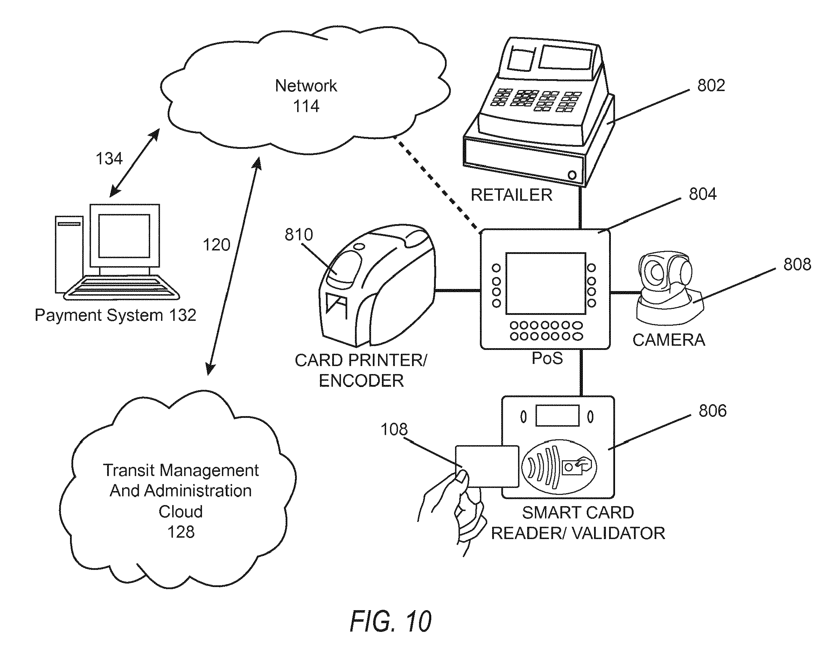

Figure 10 shows the details of a point-of-sale system according to one aspect of the invention. In particular, the various fare media may be sold at retailers in order to provide a customer 102 with easy access to fare media. For the sake of brevity, Figure 10 is directed to smart card 108. However, the features of the point-of-sale system may apply to any type of fare media.

Figure 10 further shows a retailer operating normal retail hardware 802 such as a cash register. The customer 102 may purchase a fare media, the purchase may be completed in conjunction with a point-of-sale device 804. The point-of-sale device 804 may receive a request from the retailer device 802 to purchase fare media. The point-of-sale device 804 may include a processor, random access memory, read-only memory, display, an input device, a communication component and the like. The communication component communicates with the retail hardware 802 and the network 114.

The point-of-sale device 804 may receive a request to purchase fare media and operate in conjunction with a card printer / encoder 810. The fare media printer 810 may operate to print fare media consistent with the requirements of the particular transit authority. The fare media printer may include storage of a plurality of blank fare media, a printing device for printing on the fare media, and an encoder to encode digital information on the fare media. The encoder may utilize RFID encoding and the like.

The point-of-sale system may further include a reader validator 806 that may read the fare media and validate the fare media for the customer 102. Additionally the point-of-sale system may include a camera 808 configured to capture the image of the customer 102, capture an image of the fare media including any type of bar code, QR code and the like. Finally, during and/or once the sale is completed, the point-of-sale device 804 may communicate to the network 114 and subsequently to the transit management administration cloud 128 and/or the payment system 132 to update the various databases thereof.

The system for a transit authority to administer and manage fares utilizing a cloud-based system as described herein provides infrastructure for a transit authority to have high-availability, near real-time disaster recovery, enhanced scalability, and reduced IT cost per set up, reduced maintenance, backup, and simplified patching. Moreover, the system for a transit authority to administer and manage fares utilizing a cloud-based system as described herein provides a global reach, reduced upfront investment, lower ongoing cost, flexible automated capacity, increased speed and agility, increased control, elastic and scalable services, and marketing cache'. Additionally, the system is configured to be implemented for a plurality of transit authorities and accordingly reducing the cost of operation on a per transit authority basis.

The invention may include communication channels that may be any type of wired or wireless electronic communications network, such as, e.g., a wired/wireless local area network (LAN) including Ethernet, a wired/wireless personal area network (PAN), a wired/wireless home area network (HAN), a wired/wireless wide area network (WAN), a campus network, a metropolitan network, an enterprise private network, a virtual private network (VPN), an internetwork, a backbone network (BBN), a global area network (GAN), the Internet, an intranet, an extranet, an overlay network, a cellular telephone network, a Personal Communications Service (PCS), using known protocols such as the Global System for Mobile Communications (GSM), CDMA (Code-Division Multiple Access), W-CDMA (Wideband Code-Division Multiple Access), Wireless Fidelity (Wi-Fi - IEEE 802.11 standard), Bluetooth, 3G, 4G, Long Term Evolution (LTE), EVolution-Data Optimized (EVDO), ZigBee (IEEE 802.15 standard), mesh network, and/or the like, and/or a combination of two or more thereof. Moreover, the communication channels are contemplated to include any future enhancements or protocols.

The invention may include customer communication channels that may be any type of wired or wireless electronic communications including Radio-frequency identification (RFID), a QR code (Quick Response Code) or matrix bar code, a bar code, infrared transmission, near field communication (NFC), or other type of optical machine-readable representation of data, a magnetic stripe configured to be read by swiping past a magnetic reading head, other type of communication channel as defined herein or the like. Moreover, the invention contemplates any future enhancements or protocols implemented as customer communication channels.

The invention may be implemented in any type of computing devices, such as, e.g., a desktop computer, personal computer, a laptop/mobile computer, a personal data assistant (PDA), a mobile phone, a tablet computer, cloud computing device, and the like, with wired/wireless communications capabilities via the communication channels.

In an aspect, the invention may be web-based. For example, a server may operate a web application to allow the invention to operate in conjunction with a database. The web application may be hosted in a browser-controlled environment (e.g., a Java applet and/or the like), coded in a browser-supported language (e.g., JavaScript combined with a browser-rendered markup language (e.g., Hyper Text Markup Language (HTML) and/or the like)) and/or the like such that any computer running a common web browser (e.g., Internet Explorer™, Firefox™, Chrome™, Safari™ or the like) may render the application executable. A web-based service may be more beneficial due to the ubiquity of web browsers and the convenience of using a web browser as a client (i.e., thin client). Further, with inherent support for cross-platform compatibility, the web application may be maintained and updated without distributing and installing software on each.

In an aspect, the invention may be implemented in any type of mobile smartphones that are operated by any type of advanced mobile data processing and communication operating system, such as, e.g., an Apple™ iOS™ operating system, a Google™ Android™ operating system, a RIM™ Blackberry™ operating system, a Nokia™ Symbian™ operating system, a Microsoft™ Windows Mobile™ operating system, a Microsoft™ Windows Phone™ operating system, a Linux™ operating system or the like.

Further in accordance with various aspects of the invention, the methods described herein are intended for operation with dedicated hardware implementations including, but not limited to, PCs, PDAs, semiconductors, application specific integrated circuits (ASIC), programmable logic arrays, cloud computing devices, and other hardware devices constructed to implement the methods described herein.

It should also be noted that the software implementations of the invention as described herein are optionally stored on a tangible storage medium, such as: a magnetic medium such as a disk or tape; a magneto-optical or optical medium such as a disk; or a solid state medium such as a memory card or other package that houses one or more read-only (non-volatile) memories, random access memories, or other rewritable (volatile) memories. A digital file attachment to email or other self-contained information archive or set of archives is considered a distribution medium equivalent to a tangible storage medium. Accordingly, the invention is considered to include a tangible storage medium or distribution medium, as listed herein and including art-recognized equivalents and successor media, in which the software implementations herein are stored.

Additionally, the various aspects of the disclosure may be implemented in a non-generic computer implementation. Moreover, the various aspects of the disclosure set forth herein improve the functioning of the system as is apparent from the disclosure hereof. Furthermore, the various aspects of the disclosure involve computer hardware that it specifically programmed to solve the complex problem addressed by the disclosure. Accordingly, the various aspects of the disclosure improve the functioning of the system overall in its specific implementation to perform the process set forth by the disclosure and as defined by the claims.

The many features and advantages of the invention are apparent from the detailed specification, and, thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and, accordingly, all suitable modifications and equivalents may be resorted to that fall within the scope of the invention.

## Claims

1. A remote transit authority fare collection system comprising:
at least one server configured to receive fare collection information;
at least one database configured to store the fare collection information received by the at least one server;
the at least one server further configured to aggregate the fare collection information; and
the at least one server further configured to analyze the fare collection information,
wherein the fare collection information received by the at least one server is received over a network from a remote unit.

2. The system of claim 1, wherein the fare collection information received by the at least one server is received wirelessly over a network from the remote unit.

3. The system of claim 1, wherein the fare collection information comprises a location of the fare collection, where the fare was collected, when the fare was collected, the amount of the fare, and the transit authority that collected the fare.

4. The system of claim 1, wherein the analysis of the fare collection information comprises at least one of determining whether the fare collection information is valid, determining whether the fare collection non-fraudulent, and determining whether the fare collection conforms with policy.

5. The system of claim 1, wherein the at least one server is further configured to receive a request to generate a report; and the at least one server further configured to generate and send the report.

6. The system of claim 1, wherein the remote unit is configured to register a fare collection event.

7. The system of claim 1, wherein the remote unit is configured to transmit a fare collection event to the at least one server.

8. The system of claim 1, wherein the at least one server further configured to receive a request to modify at least one remote unit; and the at least one server further configured to modify the at least one remote unit.

9. A remote transit authority fare collection process comprising:
receiving fare collection information in at least one server;
storing in at least one database the fare collection information received by the at least one server;
aggregating the fare collection information in the at least one server; and
analyzing the fare collection information in the at least one server,
wherein the fare collection information received by the at least one server is received over a network from a remote unit.

10. The process of claim 9, further comprising wirelessly receiving the fare collection information over a network from the remote unit.

11. The process of claim 9, wherein the fare collection information comprises a location of the fare collection, where the fare was collected, when the fare was collected, the amount of the fare, and the transit authority that collected the fare.

12. The process of claim 9, wherein the analyzing the fare collection information comprises at least one of determining whether the fare collection information is valid, determining whether the fare collection non-fraudulent, and determining whether the fare collection conforms with policy.

13. The process of claim 9, further comprising receiving a request to generate a report; and generating and sending the report from the at least one server.

14. The process of claim 9, further comprising registering a fare collection event with the remote unit.

15. The process of claim 9, further comprising transmitting a fare collection event from the remote unit to the at least one server.

16. The process of claim 9, further comprising receiving a request to modify at least one remote unit; and modifying the at least one remote unit.

17. A remote transit authority fare collection system comprising:
at least one server configured to receive fare collection information, wherein the fare collection information comprises at least one of a location of the fare collection, where the fare was collected, when the fare was collected, the amount of the fare, and the transit authority that collected the fare;
at least one database configured to store the fare collection information received by the at least one server;
the at least one server further configured to aggregate the fare collection information; and
the at least one server further configured to analyze the fare collection information, wherein the analysis of the fare collection information comprises at least one of determining whether the fare collection information is valid, determining whether the fare collection non-fraudulent, and determining whether the fare collection conforms with policy,
wherein the fare collection information received by the at least one server is received wirelessly over a network from the remote unit.

18. The system of claim 1, wherein the at least one server is further configured to receive a request to generate a report; and the at least one server further configured to generate and send the report.

19. The system of claim 1, wherein the remote unit is configured to register a fare collection event; and wherein the remote unit is configured to transmit a fare collection event to the at least one server.

20. The system of claim 1, wherein the at least one server further configured to receive a request to modify at least one remote unit; and the at least one server further configured to modify the at least one remote unit.
